# FASCICULE DE BREVET EUROPEEN

(11) **EP 2 288 797 B1**
(45) Date de publication et mention de la délivrance du brevet: **12.03.2014**
(21) Numéro de dépôt: 09745899.6
(22) Date de dépôt: 04.03.2009
(51) Int. Cl.: B64D 29/08, F02K 3/06, B64D 33/02, F02C 7/04

(54) **ENSEMBLE PROPULSIF POUR AERONEF, ET STRUCTURE D'ENTREE D'AIR POUR UN TEL ENSEMBLE**
ANTRIEBSEINHEIT FÜR EIN FLUGZEUG UND LUFTEINTRITTSSTRUKTUR FÜR EINE DERARTIGE EINHEIT
PROPULSION UNIT FOR AN AIRCRAFT AND AIR INTAKE STRUCTURE FOR SUCH A UNIT

(30) Priorité: 16.05.2008 FR 0802657
(43) Date de publication de la demande: 02.03.2011
(73) Titulaire: Aircelle, 76700 Gonfreville l'Orcher (FR)
(72) Inventeur: VAUCHEL, Guy, Bernard, F-76600 Le Havre (FR); THOREL, Christophe, F-76620 Le Havre (FR)
(74) Mandataire: Gaillarde, Frédéric F. Ch.
(86) Numéro de dépôt international: PCT/FR2009/000230
(87) Numéro de publication internationale: WO 2009/138580

(56) Documents cités:
- EP-A- 1 357 279
- WO-A-2005/090156
- FR-A- 2 847 304
- FR-A- 2 906 568
- GB-A- 2 274 490
- GB-A- 2 288 578

## Description

La présente invention se rapporte à un ensemble propulsif pour aéronef, et à une structure d'entrée d'air pour un tel ensemble.

On connaît de la technique antérieure, et notamment des documents FR2847304 et WO2005/090156, un ensemble propulsif pour aéronef, comprenant :
- une soufflante comprenant un carter de soufflante dont la paroi intérieure comporte un revêtement dont le bord amont est disposé en retrait par rapport au bord amont dudit carter, et
- un ensemble d'entrée d'air comprenant une structure d'entrée d'air comportant une lèvre d'entrée d'air et une virole acoustique s'étendant entre cette lèvre d'entrée d'air et le bord amont dudit revêtement.

Dans cet ensemble propulsif de la technique antérieure, et de manière classique, la virole acoustique est solidarisée au carter de soufflante par une bride annulaire, une telle bride étant reliée d'une part au carter de soufflante et d'autre part à la virole acoustique par des moyens de fixation respectifs.

Un tel agencement nécessite un dimensionnement suffisamment important de la virole acoustique pour présenter la résistance nécessaire vis-à-vis des efforts transitant dans les zones de liaison de cette virole avec cette bride.

La présente invention a notamment pour but de permettre un moindre dimensionnement de la virole acoustique d'un tel ensemble propulsif, afin de gagner en poids.

On atteint ce but de l'invention avec un ensemble propulsif pour aéronef, comprenant :
- une soufflante comprenant un carter de soufflante dont la paroi intérieure comporte un revêtement dont le bord amont est disposé en retrait par rapport au bord amont dudit carter,
- un ensemble d'entrée d'air comprenant une structure d'entrée d'air comportant une lèvre d'entrée d'air et une virole acoustique s'étendant entre cette lèvre d'entrée d'air et le bord amont dudit revêtement, ladite virole étant reliée audit carter par simple encastrement à l'intérieur de ce carter,
remarquable en ce que ladite virole vient bord à bord avec ledit revêtement.

Du fait de la liaison par simple encastrement, il n'est plus nécessaire de prévoir une bride de fixation de la virole acoustique sur le carter de soufflante, comme c'était le cas dans la technique antérieure : la suppression de cette bride constitue en soi une première source de gain de poids.

Une deuxième source de gain de poids provient du fait que la liaison par simple encastrement permet de réduire les contraintes appliquées à la virole acoustique dans sa zone de liaison avec le carter de soufflante, cette virole acoustique pouvant ainsi présenter un dimensionnement plus faible, et donc un moindre poids,

On notera par ailleurs que la liaison de la virole acoustique par simple encastrement dans le carter de soufflante permet de dissocier de manière très simple ces deux pièces l'une de l'autre, tant dans le cas où cette virole acoustique se déplace avec la structure d'entrée d'air lors de l'ouverture de cette dernière, que dans le cas où cette virole acoustique reste à l'intérieur du carter de soufflante lors de l'ouverture de la structure d'entrée d'air.

Cette dissociation aisée facilite considérablement les opérations de maintenance, notamment lorsqu'il s'agit de remplacer la virole acoustique à la suite d'impact de corps étrangers rejetés notamment par les aubes de la soufflante.

Suivant d'autres caractéristiques optionnelles de l'ensemble selon l'invention :
- l'ensemble propulsif comprend des moyens ponctuels de liaison entre la virole acoustique et le carter ; dans le cadre de la présente invention, les « moyens de liaison ponctuels » désignent des organes de fixation tels que des vis réparties de manière discrète à la périphérie de la virole acoustique ou des potences déformables comme cela est enseigné par la demande de brevet FR08/00471 déposée par la demanderesse le 29 janvier 2008.
- ladite virole acoustique est fixée sur ladite lèvre, de manière à coulisser d'un seul tenant avec ladite structure d'entrée d'air lors de l'ouverture de cette structure pour maintenance ;
- ladite virole acoustique est en simple contact bord-à-bord sur ladite lèvre, sans être fixée sur cette lèvre, de manière à demeurer encastrée à l'intérieur dudit carter lors de l'ouverture de ladite structure d'entrée d'air pour maintenance ;
- ledit carter de soufflante s'étend jusqu'à ladite lèvre ;
- ledit carter de soufflante ne s'étend pas jusqu'à ladite lèvre ;
- ledit ensemble comprend des moyens de fixation de ladite structure d'entrée d'air par rapport à ladite soufflante ;
- lesdits moyens de fixation sont interposés entre une cloison avant de ladite stucture d'entrée d'air et ledit carter;
- lesdits moyens de fixation comprennent des verrous interposés entre un panneau externe de ladite structure d'entrée d'air et ledit carter ;
- lesdits moyens de fixation sont interposés entre le bord aval de ladite lèvre et ledit carter ;
- lesdits moyens de fixation sont interposés entre le bord aval de ladite lèvre et ladite virole acoustique ;
- cet ensemble propulsif comprend des moyens de centrage de ladite structure d'entrée d'air par rapport à ladite soufflante ;
- lesdits moyens de centrage sont associés auxdits moyens de fixation ;
- cet ensemble propulsif comprend des moyens de rigidification de ladite structure d'entrée d'air ;
- lesdits moyens de rigidification comprennent des raidisseurs reliant de manière fixe ledit panneau externe à ladite virole acoustique ;
- lesdits moyens de centrage de ladite structure d'entrée d'air par rapport à ladite soufflante de carter sont interposés entre lesdits raidisseurs et le bord amont dudit carter ;
- cet ensemble propulsif comprend des raidisseurs fixés sur ledit panneau externe et en appui simple sur des platines disposées à la périphérie extérieure de ladite virole acoustique ;
- cet ensemble propulsif comprend des moyens de centrage de ladite virole acoustique par rapport audit carter de soufflante ;
- lesdits moyens de centrage de la virole acoustique comprennent des coins de centrage interposés entre les bords amont de cette virole et dudit carter ;
- ledit revêtement est au moins en partie lisse et/ou acoustique et/ou abradable : un revêtement acoustique permet de contribuer à l'absorption du bruit émis par la soufflante et par le moteur ; un revêtement abradable, situé dans la partie localisée directement autour de l'hélice de soufflante, permet aux aubes d'avoir un jeu minimal avec le carter de soufflante lors de la rotation par « rôdage » des aubes.

D'autres caractéristiques et avantages de la présente invention apparaîtront à la lumière de la description qui va suivre, et à l'examen des figures ci-annexées, dans lesquelles :
- les figures 1 et 2 représentent, de manière schématique et en coupe axiale, un ensemble propulsif conforme à un premier mode de réalisation de l'invention, respectivement en positions de maintenance et de fonctionnement ;
- la figure 3 représente une vue de détail de la zone III de la figure 2 ;
- les figures 4 et 5 sont des vues analogues aux figures 1 et 2 d'une variante du premier mode de réalisation de l'ensemble propulsif selon l'invention ;
- la figure 6 et une vue de détail de la zone VI de la figuré 5 ;
- la figure 7 représente, en position de fonctionnement, une autre variante de ce premier mode de réalisation ;
- les figures 8a et 8b sont des vues de détail de la zone VIII de la figure 7, respectivement en positions de fonctionnement et de maintenance ;
- la figure 9 est une demi-vue d'encore une autre variante du premier mode de réalisation de l'ensemble propulsif selon l'invention, en position de fonctionnement ;
- les figures 10a et 10b sont des vues de détail de la zone X de la figure 9, respectivement en positions de fonctionnement et de maintenance ;
- les figures 11 à 13 sont des vues analogues respectivement aux figures 1 à 3 d'un deuxième mode de réalisation de l'ensemble propulsif selon l'invention ;
- les figures 14 et 15 sont des vues analogues respectivement aux figures 4 et 5 d'une variante de ce deuxième mode de réalisation ;
- la figure 16 regroupe deux demi-vues d'une autre variante de ce deuxième mode de réalisation, en positions de maintenance (demi-vue supérieure) et de fonctionnement (demi-vue inférieure) ;
- la figure 17 représente une vue de détail de la zone XVII de la figure 16 ;
- les figures 18 et 19 sont de vues analogues aux figures 11 et 12 d'une autre variante de l'ensemble propulsif selon l'invention, et
- les figures 20 et 21 sont des vues analogues aux figures 11 et 12 d'encore une autre variante du deuxième mode de réalisation de l'ensemble propulsif selon l'invention.

Dans l'ensemble de la description qui va suivre, on utilisera les termes « amont » et « aval ».

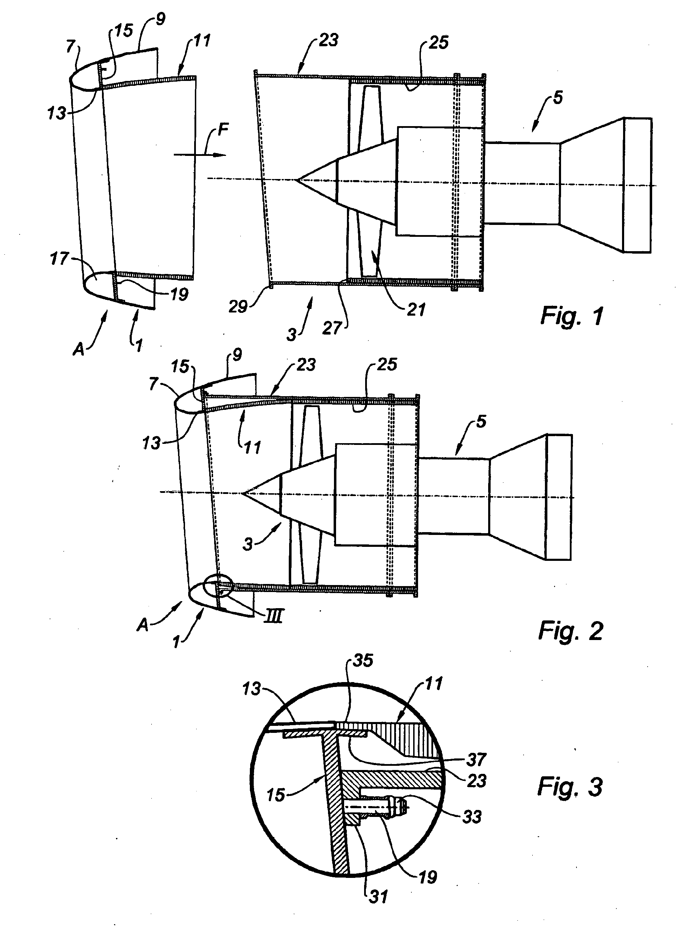

Ces termes doivent s'entendre par rapport au sens de circulation de l'air dans l'ensemble propulsif selon l'invention, tel qu'il est indiqué par la flèche F sur la figure 1.

Sur l'ensemble des figures ci-jointes, des références identiques ou analogues désignent des organes ou ensembles d'organes identiques ou analogues.

En se reportant à cette figure 1, on peut voir que l'ensemble propulsif selon l'invention comprend un ensemble d'entrée d'air A comportant une structure d'entrée d'air 1 et, en aval de celle-ci, une soufflante 3 formant elle-même la partie amont d'un turboréacteur 5.

L'ensemble d'entrée d'air A constitue la partie amont d'une nacelle dont les autres parties, destinées à entourer la soufflante 3 et le turboréacteur 5, n'ont pas été représentées.

Cet ensemble d'entrée d'air A permet de canaliser l'air de l'extérieur vers la soufflante 3 et le turboréacteur 5.

La structure d'entrée d'air 1 comprend une lèvre d'entrée d'air 7, élément périphérique constituant le bord d'attaque de cette structure d'entrée d'air, ainsi qu'un panneau externe 9 prolongeant la partie extérieure de la lèvre d'entrée d'air 7.

L'ensemble d'entrée d'air A comprend également une virole acoustique 11 prolongeant la partie intérieure de la lèvre 7.

Le panneau externe 9 et la lèvre d'entrée d'air 7 peuvent être formés d'un seul tenant.

La virole acoustique 11 consiste essentiellement en un panneau doué d'une capacité d'absorption acoustique (structure en nid d'abeille par exemple), de forme sensiblement cylindrique.

Dans un premier mode de réalisation représenté sur les figures 1 à 10, cette virole acoustique 11 est fixée au bord intérieur de la lèvre 7, de sorte que lorsque la structure d'entrée d'air 1 se trouve en position de maintenance, comme cela est représenté sur la figure 1, la structure d'entrée 1 et la virole 11 se déplacent d'un seul tenant.

On peut voir sur la figure 1 qu'une cloison avant 15, délimitant une cavité annulaire 17 à l'intérieur de la lèvre 7, peut être prévue.

Une telle cloison permet d'une part de rigidifier la structure d'entrée d'air 1, et d'autre part de mettre en oeuvre des moyens de dégivrage à l'intérieur de la cavité 17.

Avantageusement, cette cloison avant 15 supporte des pions de centrage 19.

La soufflante 3 comporte une hélice 21, disposée à l'intérieur d'un carter de soufflante 23.

Un revêtement 25, dont le bord amont 27 est en retrait par rapport au bord amont 29 du carter 23, tapisse la paroi intérieure de ce carter.

Un tel revêtement peut être lisse, ou bien présenter des caractéristiques d'absorption acoustique (de manière à limiter le niveau des émissions sonores de la soufflante 3) ou bien être abradable (de manière à permettre un jeu minimal des aubes de l'hélice 21 avec le carter 23 après la phase de « rôdage »).

Bien entendu, un tel revêtement peut être formé de plusieurs parties présentant chacune respectivement certaines des propriétés susmentionnées, par exemple : partie abradable dans la zone de l'hélice 21, et partie acoustique en aval de cette hélice.

Comme on peut le voir sur la figure 2, lorsque l'ensemble propulsif de la figure 1 se trouve en position de fonctionnement, la virole acoustique 11 est encastrée à l'intérieur du carter de soufflante et vient bord à bord avec le revêtement 25.

Dans cette première variante représentée aux figures 1 à 3, la longueur du carter de soufflante 23 est suffisante pour atteindre la cloison avant 15, ce qui permet aux pions 19 de cette cloison avant de coopérer avec une lèvre 31 formée sur le bord amont 29 du carter 23, comme cela est représenté à la figure 3.

Ces pions permettent de réaliser un centrage correct de la structure d'entrée d'air 1 par rapport à la soufflante 3, et éventuellement de fixer de manière solide cette structure d'entrée d'air sur cette soufflante : comme on peut en effet le voir à la figure 3, on peut envisager de placer des boulons 33 sur les pions 19, interdisant tout mouvement relatif de la structure d'entrée d'air par rapport à la soufflante.

On notera qu'aucun moyen de liaison particulier n'est prévu entre la virole acoustique 11 et le revêtement 25 : le maintien en place de cette virole acoustique est obtenu du seul fait de l'encastrement de cette virole dans le carter 23, et de sa liaison avec la structure d'entrée d'air 1.

Cette dernière liaison est visible sur la figure 3 : la virole acoustique 11 comporte, à son extrémité amont, une zone 35 de moindre épaisseur et de plus forte compacité, fixée sur un retour 37 de la cloison avant 15.

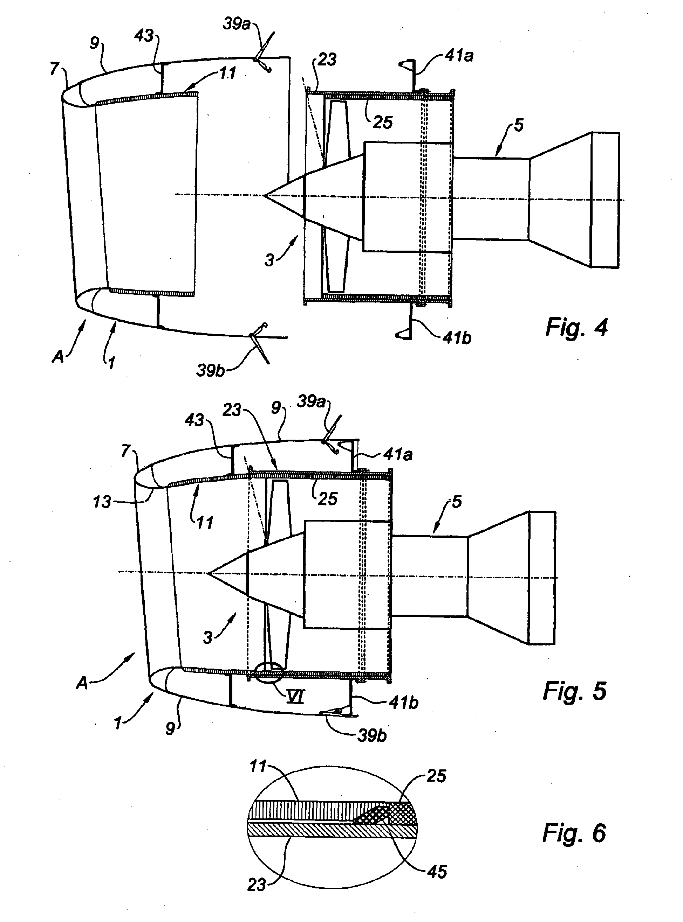

Dans la variante représentée aux figures 4 à 6, on peut voir qu'en position de fonctionnement (figure 5), le carter de soufflante 23 ne s'étend pas jusqu'au bord intérieur 13 de la lèvre 7, mais qu'en revanche le panneau externe 9 couvre une partie de ce carter de soufflante.

Dans ce cas, la fixation de la structure d'entrée d'air 1 sur le carter de soufflante 3 s'effectue au moyen de verrous manuels ou électriques 39a, 39b, coopérant avec les organes de retenue respectifs 41 a, 41 b fixés à l'extérieur du carter de soufflante 23.

La rigidification de l'ensemble d'entrée d'air peut être obtenue au moyen de raidisseurs s'étendant entre le panneau externe 9 et la virole acoustique 11.

Dans cette variante, comme dans la précédente, on peut envisager de placer à l'intérieur du carter 23 des moyens de centrage de la virole acoustique 11 par rapport au revêtement 25.

De tels moyens de centrage, qui peuvent comprendre des organes discrets ou continus 45 chanfreinés, comme cela est visible sur la figure 6, permettent de supprimer tout décalage radial de la virole acoustique par rapport au revêtement 25, et ainsi d'assurer une continuité aérodynamique.

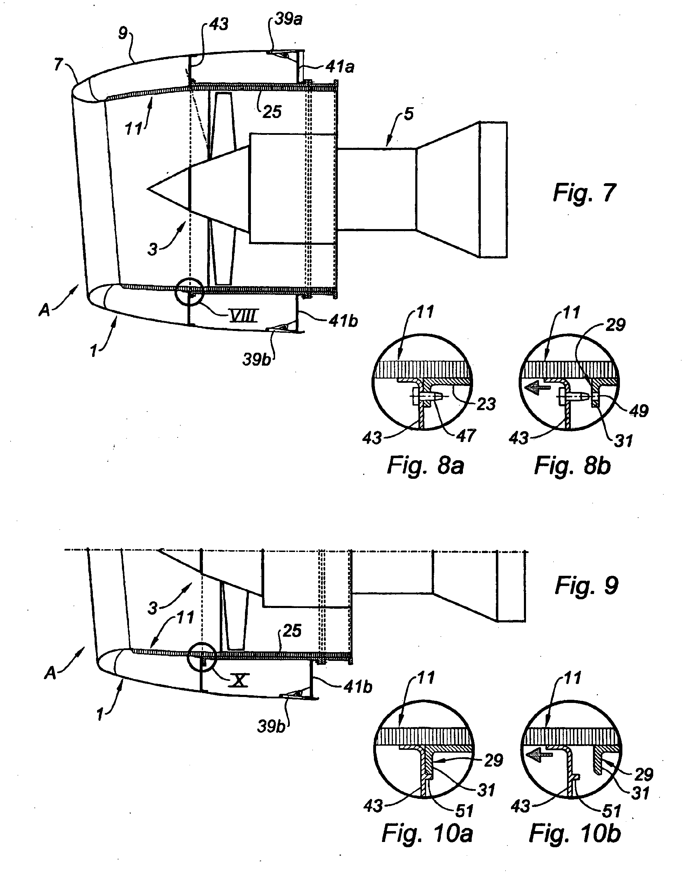

En se reportant aux figures 7 et 8, on peut voir qu'en variante les raidisseurs 43 peuvent être disposés de manière à venir en butée avec le bord amont 29 du carter 23 lorsque l'ensemble propulsif se trouve en position de fonctionnement.

Dans ce cas, on peut prévoir des pions de centrage 47 sur ces raidisseurs 43, ces pions étant aptes à coopérer avec des orifices complémentaires 49 formés dans la lèvre 31 du bord 29 du carter 23.

Ces pions de centrage 47 permettent d'optimiser le centrage de l'ensemble d'entrée d'air par rapport à la soufflante.

Une variante représentée aux figures 9 à 10 consiste à prévoir, sur les raidisseurs 43, des retours 51 venant en butée sur la partie radialement extérieure de la lèvre 31 du bord 29 du carter de soufflante (voir figures 10a et 10b),

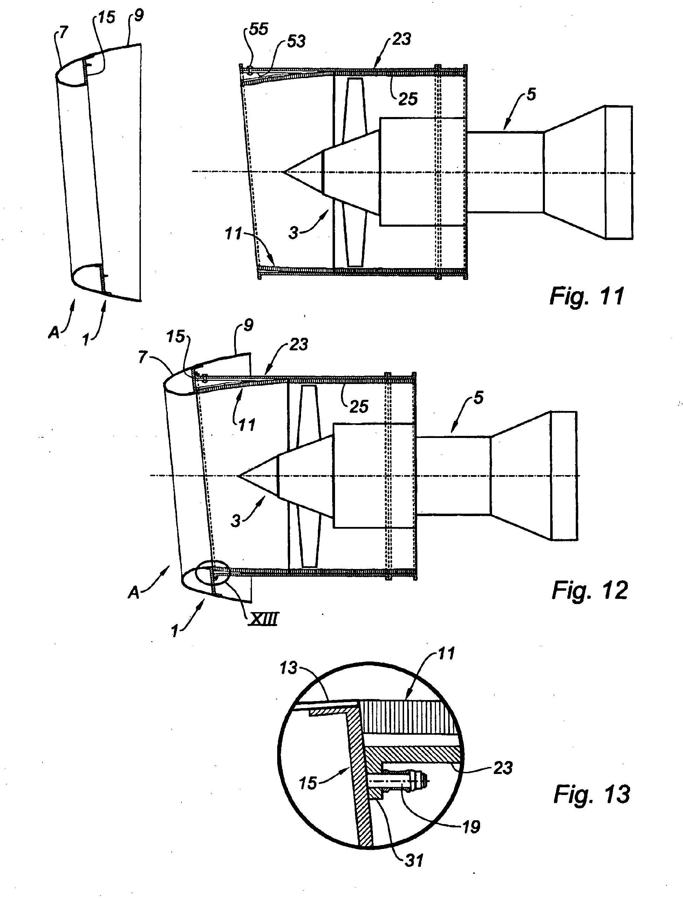

Le mode de réalisation représenté sur les figures 11 à 13 se distingue de celui représenté sur les figures 1 à 3 en ceci que la virole acoustique 11 est en simple contact bord à bord avec le bord 13 de la lèvre 7, de sorte qu'en position de maintenance (voir figure 11), cette virole acoustique 11 reste à l'intérieur du carter de soufflante 23.

La liaison par contact bord à bord entre la lèvre 7 et la virole acoustique 11 est particulièrement visible sur la vue de détail de la figure 13.

Comme dans le mode de réalisation précédent, la virole acoustique 11 est positionnée à l'intérieur du carter 23 par simple encastrement, et aucun moyen particulier de liaison n'est nécessaire entre cette virole et le revêtement 25.

On peut envisager de placer à l'intérieur du carter 23 des éléments de centrage 53 de la virole 11 par rapport à ce carter.

Ces éléments peuvent présenter une forme de coin, et être fixés par des moyens appropriés 55 sur la paroi du carter 23.

Outre le fait qu'ils permettent de centrer correctement la virole acoustique 11 par rapport au carter 23, ils permettent d'orienter correctement cette virole en rotation par rapport au carter, ainsi que d'éviter que cette virole ne tombe de ce carter lors de l'ouverture de la structure d'entrée d'air 1.

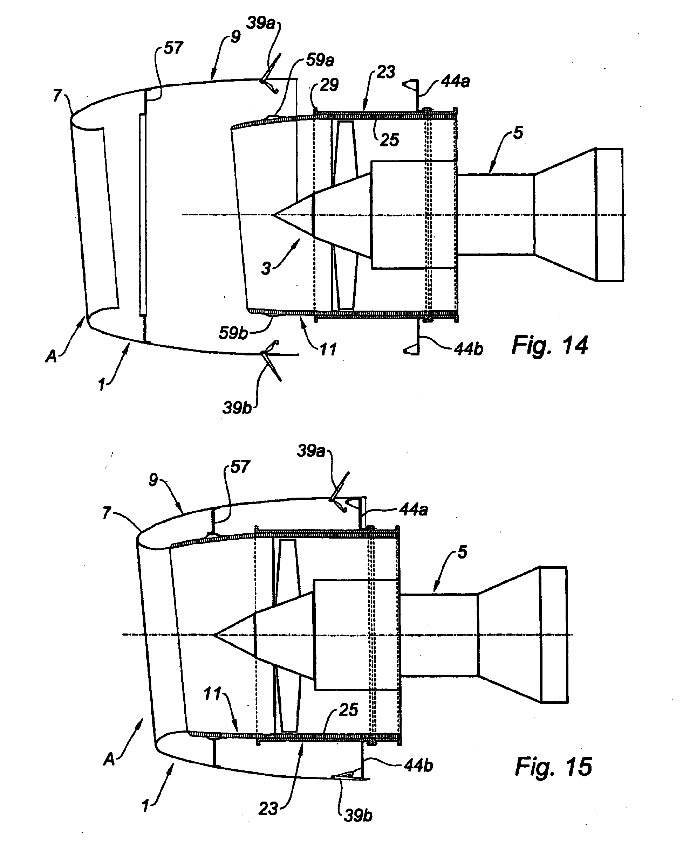

La variante des figures 14 et 15 est analogue à celle du premier mode de réalisation, représenté sur les figures 4 et 5 : on retrouve donc les verrous 39a, 39b ainsi que les organes de retenue correspondants 41 a, 41 b.

A la différence du premier mode de réalisation, la virole acoustique 11 est en simple contact bord à bord avec la lèvre 13, de sorte que lors de l'ouverture de la structure d'entrée d'air 1, cette virole acoustique reste à l'intérieur du carter 23, comme c'était le cas dans la variante des figures 11 à 13.

Toutefois, comme dans le présent cas la virole acoustique s'étend nettement au-delà du bord 29 du carter 23, on peut prévoir des moyens ponctuels de liaison de cette virole acoustique au carter 23 et/ou au revêtement 25.

Ces moyens ponctuels de liaison peuvent consister par exemple en vis espacées régulièrement à l'intérieur de la virole acoustique 11.

A noter qu'il ne s'agit en aucun cas de moyens de liaison continus tels que les brides de fixation de virole acoustique au carter de soufflante que l'on peut trouver dans la technique antérieure, et notamment dans la demande WO2005/090156.

Dans cet état de la technique, la bride permet d'assurer la tenue de la virole acoustique au contact du carter de soufflante, alors que dans le cas présent, cette tenue est assurée de par l'encastrement de cette virole à l'intérieur du carter de soufflante, des moyens ponctuels de liaison ayant uniquement vocation à éviter la chute de la virole lors de l'ouverture de la structure d'entrée d'air 1.

Du fait que dans ce mode de réalisation la structure d'entrée d'air 1 se déplace par rapport à la virole acoustique 11 qui reste encastrée à l'intérieur du carter 23, il n'est plus possible d'envisager des raidisseurs 43 qui relient de manière fixe cette structure d'entrée d'air à cette virole, comme c'était le cas dans le premier mode de réalisation (figures 4 à 9).

Toutefois, pour conserver la possibilité de rigidification de la structure d'entrée d'air 1, ainsi que pour faciliter son centrage par rapport à la soufflante, on peut fixer à l'intérieur du panneau externe 9 un organe de raidissement annulaire 57, venant en appui sur des platines 59a, 59b fixées à la périphérie extérieure de la virole acoustique 11.

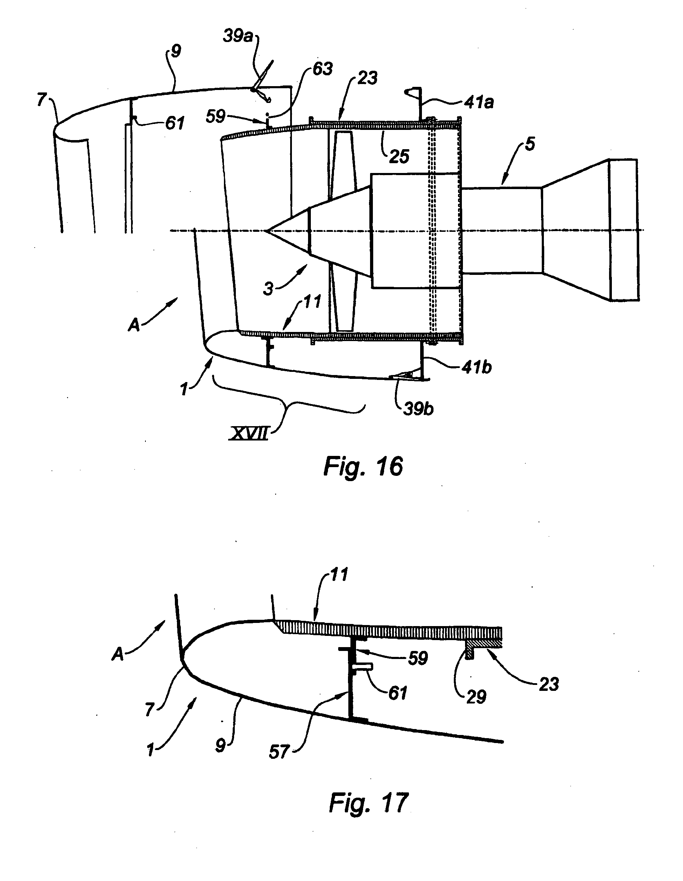

En variante, comme cela est représenté sur les figures 16 et 17, on peut prévoir que l'organe de raidissement annulaire 57 comporte des pions de centrage 61 venant coopérer avec des orifices complémentaires 63 formés dans les platines 59, ces dernières pouvant alors avoir la forme de cornières, comme cela est particulièrement visible sur la figure 17.

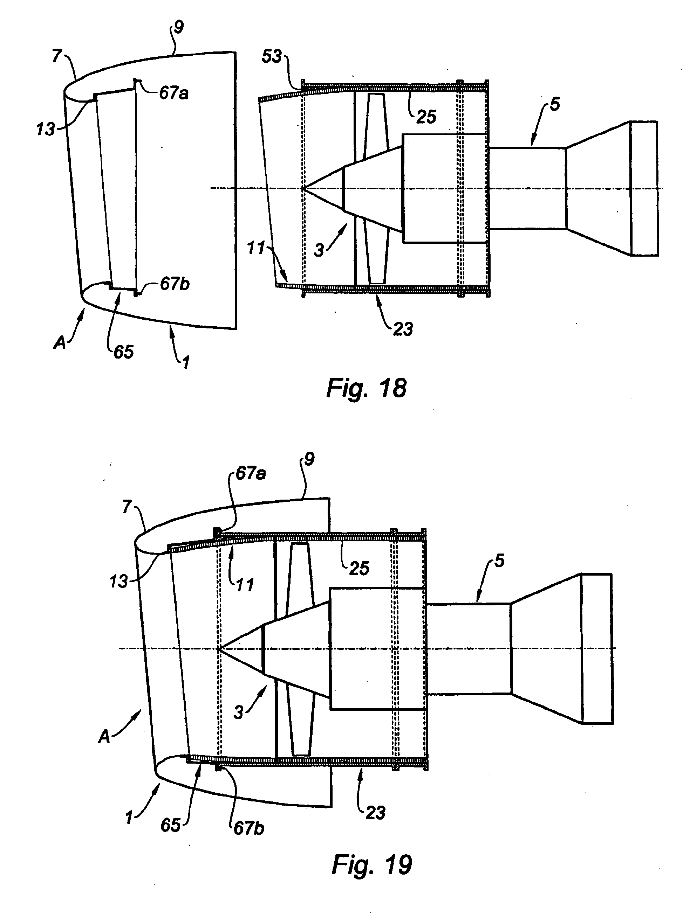

Dans la variante représentée aux figures 18 et 19, le carter de soufflante 23 présente une longueur un peu supérieure à celle des variantes des figures 14 à 17, sans toutefois recouvrir complètement la virole acoustique 11 comme dans le cas des variantes des figures 11 à 13.

Dans ce cas particulier, on peut envisager des moyens de fixation de la structure d'entrée d'air 1 sur le bord 29 du carter de soufflante 23 comprenant une pièce sensiblement tubulaire 65 dont la partie amont est fixée sur le bord intérieur de la lèvre 7, et dont la partie aval comporte des pions aptes à coopérer avec des orifices correspondants formés dans le bord 29 du carter 23.

Ces pions 67a, 67b permettent d'une part le centrage de la structure d'entrée d'air 1 par rapport au carter de soufflante 23, et d'autre part la fixation de cette entrée d'air sur ce carter.

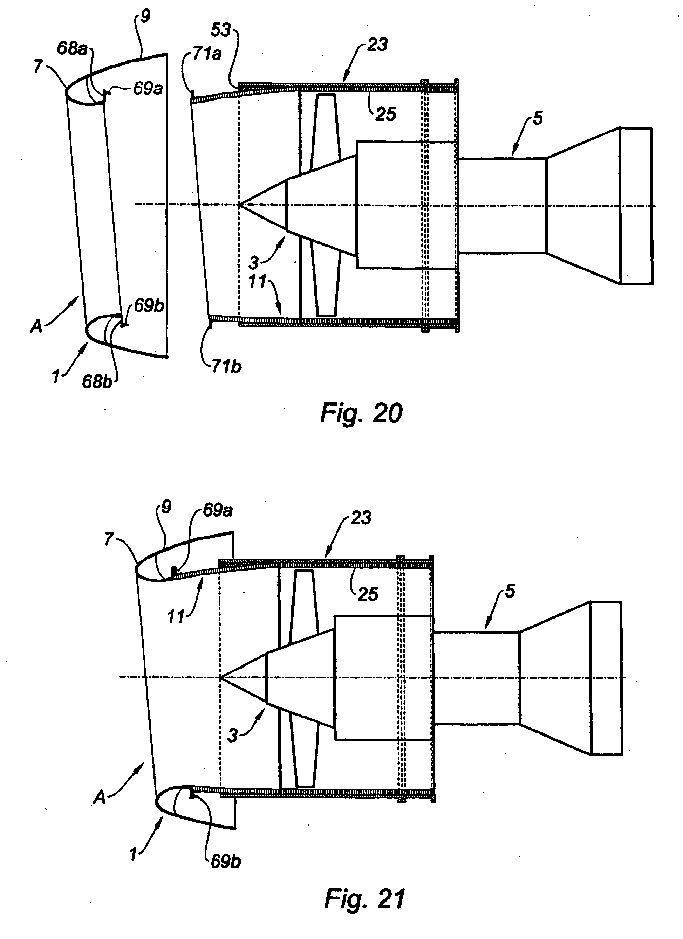

Dans la variante représentée aux figures 20 et 21, où le carter de soufflante présente une longueur comparable à celle de la variante des figures 18 et 19, le centrage et la fixation de la structure d'entrée d'air 1 par rapport au carter de soufflante s'effectuent par l'intermédiaire de cornières 68a, 68b, fixées sur le bord intérieur 13 de la lèvre 7, ces cornières étant munies de pions de centrage et de fixation 69a, 69b, aptes à coopérer avec des cornières munies d'orifices complémentaires 71a, 71b, fixées à la périphérie de la virole acoustique 11, au voisinage du bord amont de cette virole.

Cette variante suppose que la virole acoustique 11 présente une rigidité légèrement supérieure à celle des variantes précédentes, de manière à pouvoir supporter les efforts transmis par la structure d'entrée d'air 1.

Les avantages de l'ensemble propulsif selon l'invention résultent directement de la description qui précède.

Tant dans le premier mode de réalisation (virole acoustique 11 solidaire de la structure d'entrée d'air 1, figures 1 à 10) que dans le deuxième mode de réalisation (virole acoustique non liée à la structure d'entrée d'air, figures 11 à 21), la virole acoustique 11 coopère avec le carter de soufflante 23 par simple encastrement à l'intérieur de celui-ci, complété éventuellement par des moyens de liaison ponctuels tels que des vis réparties de manière discrète à la périphérie de la virole acoustique ou des potences déformables comme cela est enseigné par la demande de brevet FR08/00471 déposée par la demanderesse le 29 janvier 2008.

Du fait de cette liaison par encastrement, il n'est plus nécessaire de prévoir une bride de fixation de la virole acoustique sur le carter de soufflante, comme c'était le cas dans la technique antérieure.

Une telle bride nécessitait un dimensionnement suffisamment important de la virole acoustique pour présenter la résistance nécessaire vis-à-vis des efforts transitant dans les zones de liaison de cette virole avec cette bride.

A la différence de cet état de la technique, la virole acoustique de l'ensemble propulsif selon l'invention est moins contrainte et peut de ce fait présenter un dimensionnement plus faible, ce qui permet de gagner en poids.

On notera par ailleurs que la liaison de la virole acoustique 11 par simple encastrement dans le carter de soufflante 23 permet de dissocier de manière très simple ces deux pièces l'une de l'autre, tant dans le premier mode de réalisation (virole acoustique se déplaçant avec la structure d'entrée d'air lors de l'ouverture de cette dernière) que dans le deuxième mode de réalisation (virole acoustique restant à l'intérieur du carter de soufflante lors de l'ouverture de la structure d'entrée d'air).

Cette dissociation aisée facilite considérablement les opérations de maintenance, notamment lorsqu'il s'agit de remplacer la virole acoustique à la suite d'impact de corps étrangers rejetés notamment par les aubes de la soufflante.

La présente invention offre donc une très nette amélioration notamment par rapport aux agencements prévus dans le brevet FR2903734 ou dans le brevet US4732 532 , dans lesquels la virole acoustique est en fait intégrée à un ensemble acoustique s'étendant sur toute la longueur de l'entrée d'air et du carter de soufflante.

On notera également que dans la plupart des variantes décrites ci-dessus, la transition des efforts entre la structure d'entrée d'air et le carter de soufflante s'effectue directement entre ces deux pièces, par des raidisseurs et/ou des moyens de verrouillage, sans qu'il y ait sollicitation de la virole acoustique : ceci permet d'alléger considérablement le dimensionnement de cette virole.

Bien entendu, la présente invention n'est nullement limitée aux modes de réalisation et aux variantes décrits et représentés, fournis à titre de simples exemples.

## Revendications

1. Ensemble propulsif pour aéronef, comprenant :
- une soufflante (3) comprenant un carter de soufflante (23) dont la paroi intérieure comporte un revêtement (25) dont le bord amont est disposé en retrait par rapport au bord amont (29) dudit carter (23),
- un ensemble d'entrée d'air (A) comprenant une structure d'entrée d'air (1) comportant une lèvre d'entrée d'air (7) et une virole acoustique (11) s'étendant entre cette lèvre d'entrée d'air (7) et le bord amont dudit revêtement (25), ladite virole (11) étant reliée audit carter (23) par simple encastrement à l'intérieur de ce carter (23),
**caractérisé en ce que** ladite virole (11) vient bord à bord avec ledit revêtement (25).

2. Ensemble propulsif selon la revendication 1, **caractérisé en ce qu'**il comprend en outre des moyens ponctuels de liaison entre la virole acoustique (11) et le carter (23).

3. Ensemble propulsif selon l'une quelconque des revendications 1 ou 2, **caractérisé en ce que** ladite virole acoustique (11) est fixée sur ladite lèvre (7), de manière à coulisser d'un seul tenant avec ladite structure d'entrée d'air (1) lors de l'ouverture de cette structure (1) pour maintenance.

4. Ensemble propulsif selon l'une quelconque des revendications 1 ou 2, **caractérisé en ce que** ladite virole acoustique (11) est en simple contact bord-à-bord sur ladite lèvre (7), sans être fixée sur cette lèvre (7), de manière à demeurer encastrée à l'intérieur dudit carter (23) lors de l'ouverture de ladite structure d'entrée d'air (1) pour maintenance.

5. Ensemble propulsif selon l'une des revendications 3 ou 4, **caractérisé en ce que** ledit carter de soufflante (23) s'étend jusqu'à ladite lèvre (7).

6. Ensemble propulsif selon l'une des revendications 3 ou 4, **caractérisé en ce que** ledit carter de soufflante (23) ne s'étend pas jusqu'à ladite lèvre (7).

7. Ensemble propulsif selon l'une quelconque des revendications précédentes, **caractérisé en ce qu'**il comprend des moyens de fixation de ladite structure d'entrée d'air (1) par rapport à ladite soufflante (3).

8. Ensemble propulsif selon les revendications 5 et 7, **caractérisé en ce que** lesdits moyens de fixation (19, 31, 33) sont interposés entre une cloison avant (15) de ladite stucture d'entrée d'air (1) et ledit carter (23).

9. Ensemble propulsif selon la revendication 7, **caractérisé en ce que** lesdits moyens de fixation comprennent des verrous (39a, 39b) interposés entre un panneau externe (9) de ladite structure d'entrée d'air (1) et ledit carter (23).

10. Ensemble propulsif selon les revendications 4, 6 et 7, **caractérisé en ce que** lesdits moyens de fixation (65, 67a, 67b) sont interposés entre le bord aval (13) de ladite lèvre (7) et ledit carter (23),

11. Ensemble propulsif selon les revendications 4, 6 et 7, **caractérisé en ce que** lesdits moyens de fixation (68a, 68b, 69a, 69b, 71a, 71b) sont interposés entre le bord aval (13) de ladite lèvre (7) et ladite virole acoustique (11).

12. Ensemble propulsif selon l'une quelconque des revendications précédentes, **caractérisé en ce qu'**il comprend des moyens de centrage (19, 51, 57, 61, 65, 67a, 67b, 69a, 69b) de ladite structure d'entrée d'air (1) par rapport à ladite soufflante (3).

13. Ensemble propulsif selon la revendication 12 et l'une quelconque des revendications 7 à 11, **caractérisé en ce que** lesdits moyens de centrage sont associés auxdits moyens de fixation.

14. Ensemble propulsif selon l'une quelconque des revendications précédentes, **caractérisé en ce qu'**il comprend des moyens de rigidification (43, 57, 61, 65) de ladite structure d'entrée d'air (1).

15. Ensemble propulsif selon les revendications 3 et 14, **caractérisé en ce que** lesdits moyens de rigidification comprennent des raidisseurs (43) reliant de manière fixe ledit panneau externe (9) à ladite virole acoustique (11).

16. Ensemble propulsif selon les revendications 12 et 15, **caractérisé en ce que** lesdits moyens de centrage (51) de ladite structure d'entrée d'air par rapport à ladite soufflante de carter sont interposés entre lesdits raidisseurs (43) et le bord amont (29) dudit carter (23).

17. Ensemble propulsif selon l'une des revendications 4 et 14, **caractérisé en ce qu'**il comprend des raidisseurs (57) fixés sur ledit panneau externe (9) et en appui simple sur des platines (59a, 59b) disposées à la périphérie extérieure de ladite virole acoustique (11).

18. Ensemble propulsif selon l'une quelconque des revendications précédentes, **caractérisé en ce qu'**il comprend des moyens (45, 53) de centrage de ladite virole acoustique (11) par rapport audit carter de soufflante (23).

19. Ensemble propulsif selon les revendications 4 et 18, **caractérisé en ce que** lesdits moyens de centrage de la virole acoustique (11) comprennent des coins de centrage (53) interposés entre les bords amont de cette virole et dudit carter (23).

20. Ensemble propulsif selon l'une quelconque des revendications précédentes, caractérisé en ledit revêtement (25) est au moins en partie lisse et/ou acoustique et/ou abradable.

## Patentansprüche

1. Antriebseinheit für ein Luftfahrzeug, die umfasst:
- ein Gebläse (3), das ein Gebläsegehäuse (23) umfasst, dessen Innenwand eine Beschichtung (25) aufweist, deren oberstromiger Rand im Verhältnis zum oberstromigen Rand (29) des Gehäuses (23) zurückgezogen angeordnet ist,
- eine Lufteinlasseinheit (A), die eine Lufteingangsstruktur (1) umfasst, die eine Lufteinlasslippe (7) und einen akustischen Ring (11) aufweist, der sich zwischen dieser Lufteinlasslippe (7) und dem oberstromigen Rand der Beschichtung (25) erstreckt, wobei der Ring (11) mit dem Gehäuse (23) durch einfaches Rasten in diesem Gehäuse (23) verbunden ist,
**dadurch gekennzeichnet, dass** der Ring (11) mit der Beschichtung (25) Rand an Rand kommt.

2. Antriebseinheit nach Anspruch 1, **dadurch gekennzeichnet, dass** sie ferner punktuelle Verbindungsmittel zwischen dem akustischen Ring (11) und dem Gehäuse (23) umfasst.

3. Antriebseinheit nach einem der Ansprüche 1 oder 2, **dadurch gekennzeichnet, dass** der akustische Ring (11) derart auf der Lippe (7) befestigt ist, dass er mit der Lufteingangsstruktur (1) beim Öffnen dieser Struktur (1) zwecks Wartung in einem Stück gleitet.

4. Antriebseinheit nach einem der Ansprüche 1 oder 2, **dadurch gekennzeichnet, dass** der akustische Ring (11) derart auf der Lippe (7) in einfachem Rand-zu-Rand-Kontakt, ohne auf dieser Lippe (7) befestigt zu sein, ist, dass er beim Öffnen der Lufteingangsstruktur (1) zwecks Wartung in dem Gehäuse (23) eingerastet bleibt.

5. Antriebseinheit nach einem der Ansprüche 3 oder 4, **dadurch gekennzeichnet, dass** sich das Gebläsegehäuse (23) bis zu der Lippe (7) erstreckt.

6. Antriebseinheit nach einem der Ansprüche 3 oder 4, **dadurch gekennzeichnet, dass** sich das Gebläsegehäuse (23) nicht bis zu der Lippe (7) erstreckt.

7. Antriebseinheit nach einem der vorangehenden Ansprüche, **dadurch gekennzeichnet, dass** sie Befestigungsmittel der Lufteingangsstruktur (1) im Verhältnis zum Gebläse (3) umfasst.

8. Antriebseinheit nach den Ansprüchen 5 und 7, **dadurch gekennzeichnet, dass** die Befestigungsmittel (19, 31, 33) zwischen einer vorderen Trennwand (15) der Lufteingangsstruktur (1) und dem Gehäuse (23) zwischengestellt sind.

9. Antriebseinheit nach Anspruch 7, **dadurch gekennzeichnet, dass** die Befestigungsmittel zwischen einer äußeren Platte (9) der Lufteingangsstruktur (1) und dem Gehäuse (23) zwischengestellte Riegel (39a, 39b) umfassen.

10. Antriebseinheit nach den Ansprüchen 4, 6 und 7, **dadurch gekennzeichnet, dass** die Befestigungsmittel (65, 67a, 67b) zwischen dem unterstromigen Rand (13) der Lippe (7) und dem Gehäuse (23) zwischengestellt sind.

11. Antriebseinheit nach den Ansprüchen 4, 6 und 7, **dadurch gekennzeichnet, dass** die Befestigungsmittel (68a, 68b, 69a, 69b, 71a, 71b) zwischen dem unterstromigen Rand (13) der Lippe (7) und dem akustischen Ring (11) zwischengestellt sind.

12. Antriebseinheit nach einem der vorangehenden Ansprüche, **dadurch gekennzeichnet, dass** sie Zentriermittel (19, 51, 57, 61, 65, 67a, 67b, 69a, 69b) der Lufteingangsstruktur (1) im Verhältnis zum Gebläse (3) umfasst.

13. Antriebseinheit nach Anspruch 12 und einem der Ansprüche 7 bis 11, **dadurch gekennzeichnet, dass** die Zentriermittel den Befestigungsmitteln zugeordnet sind.

14. Antriebseinheit nach einem der vorangehenden Ansprüche, **dadurch gekennzeichnet, dass** sie Versteifungsmittel (43, 57, 61, 65) der Lufteingangsstruktur (1) umfasst.

15. Antriebseinheit nach den Ansprüchen 3 und 14, **dadurch gekennzeichnet, dass** die Versteifungsmittel Verstärkungen (43) umfassen, die die äußere Platte (9) fest mit dem akustischen Ring (11) verbinden.

16. Antriebseinheit nach den Ansprüchen 12 und 15, **dadurch gekennzeichnet, dass** die Zentriermittel (51) der Lufteingangsstruktur (1) im Verhältnis zum Gebläsegehäuse zwischen den Verstärkungen (43) und dem oberstromigen Rand (29) des Gehäuses (23) zwischengestellt sind.

17. Antriebseinheit nach einem der Ansprüche 4 und 14, **dadurch gekennzeichnet, dass** sie Verstärkungen (57) umfasst, die auf der äußeren Platte (9) befestigt und in einfacher Abstützung auf Plättchen (59a, 59b) sind, die auf dem Außenrand des akustischen Rings (11) angeordnet sind.

18. Antriebseinheit nach einem der vorangehenden Ansprüche, **dadurch gekennzeichnet, dass** sie Zentriermittel (45, 53) des akustischen Rings (11) im Verhältnis zum Gebläsegehäuse (23) umfasst.

19. Antriebseinheit nach den Ansprüchen 4 und 18, **dadurch gekennzeichnet, dass** die Zentriermittel des akustischen Rings (11) Zentrierkeile (53) umfassen, die zwischen den oberstromigen Rändern dieses Rings und des Gehäuses (23) zwischengestellt sind.

20. Antriebsgruppe nach einem der vorangehenden Ansprüche, **dadurch gekennzeichnet, dass** die Verkleidung (25) mindestens teilweise glatt und/oder akustisch und/oder abriebfähig ist.

## Claims

1. A propulsion unit for an aircraft, comprising:
- a fan (3) comprising a fan casing (23) whereof the inner wall includes a coating (25) whereof the upstream edge is positioned withdrawn relative to the upstream edge (29) of said casing (23),
- an air intake unit (A) comprising an air Intake structure (1) including an air intake lip (7) and an acoustic shroud (11) extending between said air intake lip (7) and the upstream edge of said coating (25), said shroud (11) being connected to said casing (23) by simple embedding inside said casing (23),
**characterized in that** said shroud (11) comes edge to edge with said coating (25).

2. The propulsion unit according to claim 1, **characterized in that** further comprises periodic connecting means between the acoustic shroud (11) and the casing (23).

3. The propulsion unit according to any one of claims 1 or 2, **characterized in that** said acoustic shroud (11) is fastened on said lip (7), so as to slide in a single piece with said air Intake structure (1) when said structure (1) is opened for maintenance.

4. The propulsion unit according to any one of claims 1 or 2, **characterized in that** said acoustic shroud (11) is in simple edge-to-edge contact on said lip (7), without being fastened on said lip (7), so as to remain embedded inside said casing (23) when said air intake structure (1) is opened for maintenance.

5. The propulsion unit according to one of claims 3 or 4, **characterized in that** said fan casing (23) extends as far as said lip (7).

6. The propulsion unit according to one of claims 3 or 4, **characterized in that** said fan casing (23) does not extend as far as said lip (7).

7. The propulsion unit according to any one of the preceding claims, **characterized in that** it comprises means for fastening said air intake structure (1) relative to said fan (3).

8. The propulsion unit according to claims 5 and 7, **characterized in that** said fastening means (19, 31, 33) are inserted between a front partition (15) of said air intake structure (1) and said casing (23).

9. The propulsion unit according to claim 7, **characterized in that** said fastening means comprise bolts (39a, 39b) inserted between an outer panel (9) of said air intake structure (1) and said casing (23).

10. The propulsion unit according to claims 4, 6 and 7, **characterized in that** said fastening means (65, 67a, 67b) are inserted between the downstream edge (13) of said lip (7) and said casing (23).

11. The propulsion unit according to claims 4, 6 and 7, **characterized in that** said fastening means (68, 68, 69, 69, 71, 71) are inserted between the downstream edge (13) of said lip (7) and said acoustic shroud (11).

12. The propulsion unit according to any one of the preceding claims, **characterized in that** it comprises centering means (19, 51, 57, 61, 65, 67a, 67b, 69a, 69b) for centering said air Intake structure (1) relative to said fan (3).

13. The propulsion unit according to claim 12 and any one of claims 7 to 11, **characterized in that** said centering means are associated with said fastening means.

14. The propulsion unit according to any one of the preceding claims, **characterized in that** it comprises means (43, 57, 61, 65) for stiffening said air intake structure (1).

15. The propulsion unit according to claims 3 and 14, **characterized in that** said stiffening means comprise stiffeners (43) fixedly connecting said outer panel (9) to said acoustic shroud (11).

16. The propulsion unit according to claims 12 and 15, **characterized in that** said means (51) for centering said air intake structure relative to said fan casing are inserted between said stiffeners (43) and the upstream edge (29) of said casing (23).

17. The propulsion unit according to one of claims 4 and 14, **characterized in that** it comprises stiffeners (57) fixed on said outer panel (9) and in simple bearing on platens (59a, 59b) positioned on the outer periphery of said acoustic shroud (11).

18. The propulsion unit according to any one of the preceding claims, **characterized in that** it comprises means (45, 53) for centering said acoustic shroud (11) relative to said fan casing (23).

19. The propulsion unit according to claims 4 and 18, **characterized in that** said means for centering the acoustic shroud (11) comprise centering comers (53) inserted between the upstream edges of said shroud and said casing (23).

20. The propulsion unit according to any one of the preceding claims, **characterized in that** said coating (25) is at least partially smooth and/or acoustic and/or abradable.
